# EUROPEAN PATENT SPECIFICATION

(11) **EP 4 059 648 B1**
(45) Date of publication and mention of the grant of the patent: **11.10.2023**
(21) Application number: 22160409.3
(22) Date of filing: 07.03.2022
(51) Int. Cl.: B23K 9/025, B23K 9/23, B23K 9/32, B23K 37/02, H01R 4/66, B23K 101/16, B23K 103/04

(54) **A WELDING MACHINE WITH A PLURALITY OF TORCHES AND A PLURALITY OF GROUNDING CONTACTS**
EINE SCHWEISSMASCHINE MIT MEHREREN BRENNERN UND MEHREREN ERDUNGSKONTAKTEN
UNE MACHINE DE SOUDAGE AVEC UNE PLURALITÉ DE TORCHES ET UNE PLURALITÉ DE CONTACTS DE MISE À LA TERRE

(30) Priority: 15.03.2021 IT 202100006080
(43) Date of publication of application: 21.09.2022
(73) Proprietor: FIVES OTO S.P.A., 42022 Boretto, Reggio Emilia (IT)
(72) Inventor: MARCHESI, Marco, 42022 Boretto (Reggio Emilia) (IT)
(74) Representative: Casadei, Giovanni

(56) References cited:
- JP-A- 2010 082 674
- JP-A- 2012 000 665
- US-A1- 2014 374 400
- US-A1- 2021 046 573

## Description

The present invention relates to a welding machine which is widely used in the field of head-tail welding of sheet-metal strips intended, for example, for making tubes.

Various technological processes are currently used for producing manufactured articles using a coil of metal material strip which is continuously worked in line as a starting material.

Basically, the coil is progressively unwound continuously and the strip is subjected to subsequent in-line processing. A typical example for such processes is represented by the production of longitudinally welded tubes, which takes place by progressively bending the strip around a longitudinal axis until the longitudinal edges of the strip are brought into contact, which edges are welded together to obtain a tube. Still in line, the tube is sectioned into portions of predetermined length according to known methods.

In order not to interrupt the continuity of production, a coil near depletion is replaced by welding the head end of a new coil at the tail end of the coil near depletion, with no need to stop the production line.

Welding machines are currently used to carry out this head-tail welding, which machines comprise a resting plane on which, by means of a locking means, the head end and tail end of the coils to be welded are positioned. The edges of the ends are approached one another and kept at a certain distance to allow the welding seam to penetrate the entire thickness of the strip. After positioning and locking the two ends to be welded, one or more welding torches perform the welding.

As is known, welding torches perform arc-type welding. In particular, as is known, a current generator creates an electric current between the strips to be welded and the welding torch and a grounding contact is introduced into the system to close the electric circuit between the welding torch itself and the strips.

Disadvantageously, known welding machines have drawbacks relating to the welding operations through several torches acting on the strips simultaneously.

In particular, in known welding machines, the grounding contacts relating to each torch are placed in proximity to each other, preferably, at one end of the locking means and interact operatively with the respective torches by means of grounding cables and clamps. In this situation, the grounding contacts interfere with each other, preventing the current generators from putting the grounding contacts themselves and the respective torches in operating relationship with each other for the correct calculation of the voltage and current that are necessary for the welding operations. An example of such known welding machine is disclosed in document JP 2012 000665 A.

The technical task of the present invention is thus to provide a welding machine able to overcome the prior-art drawbacks which have emerged. The object of the present invention is therefore that of providing a welding machine which allows a welding to be carried out without interference between the grounding contacts of the torches.

A further object of the present invention is therefore that of providing a welding machine in which each torch can be set with optimal welding parameters independently of the other torches so as to obtain a welding machine whose torches work simultaneously according to respective optimal conditions.

A welding machine according to the present invention is defined in claim 1. The dependent claims correspond to possible embodiments of the invention.

In particular, the stated technical task and specified objects are substantially achieved by a welding machine comprising a resting plane configured to support respectively a tail portion and a head portion of two metal sheets to be joined. The metal sheets are slidable along an advancement direction. The welding machine, subject-matter of the present invention, further comprises a sheet-metal pressing means configured to lock in a set position the head and tail portions on the resting plane and a plurality of welding torches configured to join respective edges of the tail and head portions and slidably movable along a transverse direction to the advancement direction. The welding machine is characterized in that it further comprises a plurality of grounding contacts that is each electrically associated with a respective welding torch and movable solidly constrained to the respective welding torch along the transverse direction.

Advantageously, the possibility of moving the grounding contacts together with the respective welding torch allows avoiding interferences between the grounding contacts, allowing the welding voltage and current to be optimally adjusted for each welding torch.

Further characteristics and advantages of the present invention will become more apparent from the indicative and thus non-limiting description of an embodiment of a welding machine.

Such a description will be set out below with reference to the appended drawings, which are provided solely for illustrative and therefore non-limiting purposes, in which:
- figure 1 shows a front view of a welding machine subject-matter of the present invention;
- figure 2 shows a perspective view of the welding machine of figure 1;
- figure 3 shows a sectional view of a component of the welding machine of figure 1.

With reference to the accompanying figures, 1 indicates a welding machine configured to allow the welding of a tail portion and a head portion of two metal sheets to be joined so as to substantially define a single metal sheet used for example in a line for making tubes.

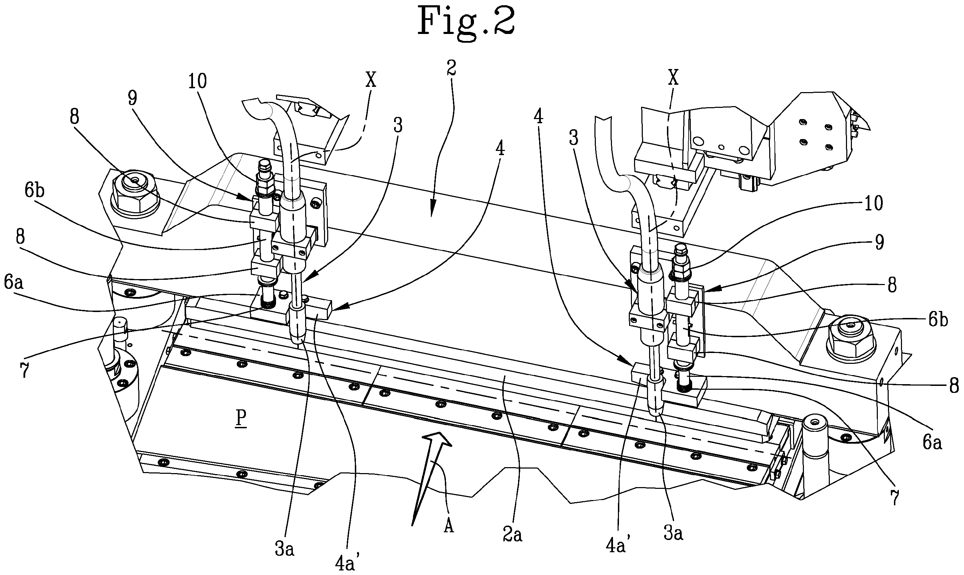

In particular, as shown in figure 2, the welding machine 1 comprises a resting plane "P" configured to respectively support the tail portion and the head portion of the metal sheets. These head and tail portions are positioned on the resting plane "P" in such a way that the respective edges to be joined, by welding, are kept at a certain mutual distance so as to define a gap such that the welding seam is allowed to penetrate the entire thickness of the head and tail portions themselves.

Preferably, the edges of the head portion and the edges of the tail portion extend along a transverse direction "B" to an advancement direction "A" of the metal sheets to be joined.

In the preferred embodiment, the aforesaid edges have the same length and the same thickness since the metal sheets have the same width and the same thickness.

In an alternative embodiment, the edges can have a length and/or thickness different from each other.

As shown in the accompanying figures, the welding machine 1 further comprises a sheet-metal pressing means 2 configured to lock in a set position the tail portion and the head portion on the resting plane "P".

In the preferred embodiment, the sheet-metal pressing means 2 comprises respective pressers 2b movable along a direction that is perpendicular to the resting plane "P" between an active position and an inactive position. In particular, in the active position, the pressers 2b lock the head portion and the tail portion of the metal sheets in contact with the resting plane "P". In this position, in fact, the pressers 2b impart a compression on the head and tail portions so as to keep them in a flat configuration.

On the other hand, in the inactive position, the pressers 2b occupy a position that is distal from the metal sheets in such a way as to allow the latter, at the end of the welding operations, to advance along the advancement direction "A".

Preferably, the pressers 2b are made in the form of horizontal crosspieces provided with a pressure surface facing downwards and located transversely to the advancement direction "A" of the metal sheets.

In the preferred embodiment, the welding machine 1 comprises a motor means, not shown, arranged to control the movement of the pressers 2b between the active and inactive positions.

In particular, the pressers 2b are movable, by means of the motor means, along respective vertical guides made, for example, in the form of vertical stems and positioned on the sides of the resting plane "P".

The welding machine 1, subject-matter of the present invention, further comprises a plurality of welding torches 3 configured to join the respective edges of the tail and head portions of the metal sheets lying on the resting plane "P". The welding torches 3 are slidably movable along a transverse direction "B" to the advancement direction "A" of the metal sheets so as to slide along the edges of the head portion and of the tail portion to carry out the welding.

Preferably, the welding torches 3 have an elongated shape extending along an extension direction "X" perpendicular to the resting plane "P".

As shown in the accompanying figures, the welding machine 1 further comprises a plurality of grounding contacts 4 that is each electrically associated with a respective welding torch 3 and movable solidly constrained to the respective welding torch 3 along the transverse direction "B".

Advantageously, the fact that each grounding contact 4 moves solidly constrained to the respective welding torch 3 avoids interferences and disturbances between the grounding contacts 4, increasing the overall efficiency of the welding machine 1.

Advantageously, the fact that each grounding contact 4 moves solidly constrained to the respective welding torch 3 allows each welding torch 3 to be set according to optimal operating parameters.

In the preferred embodiment, in order to move a grounding contact 4 solidly constrained to the respective welding torch 3, the welding machine 1 further comprises a guide 5 extending along the transverse direction "B" to the advancement direction "A" and a plurality of carriages 5a that is slidably movable on the guide 5 itself.

In greater detail, each carriage 5a supports a welding torch 3 and the respective grounding contact 4 so that the welding torch 3 and the grounding contact 4 themselves are simultaneously slidably movable to carry out the welding of the metal sheets underneath.

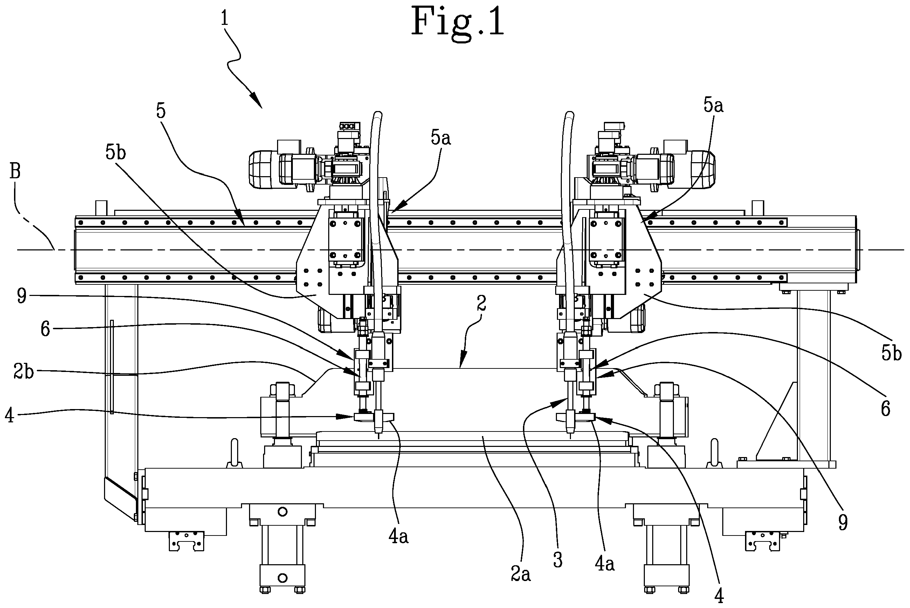

In other words, as shown in figure 1, during the sliding movement of the welding torch 3 along the guide 5, the respective grounding contact 4 is also moved slidably as it is solidly mounted to the carriage 5a supporting the welding torch 3 itself.

Advantageously, the possibility of moving each welding torch 3 together with the respective grounding contact 4 allows, in use, keeping the mutual distance between the welding torch 3 and the grounding contact 4 itself fixed, considerably reducing the occurrence of interferences.

Preferably, each welding torch 3 and the respective grounding contact 4 are also movable towards and away from the resting plane "P" integrally, in particular, the welding torch 3 and the grounding contact 4 are mounted on the same lifting member 5b mounted in turn on a respective carriage 5a.

In use therefore, to carry out a head-tail welding between two metal sheets, the tail portion of a metal sheet and the head portion of a further metal sheet are arranged on the resting plane "P" and approached each other in such a way that the respective edges define a gap for the welding seam.

Preferably, the gap between the two metal sheets is underneath the guide 5 on which the support carriages 5a for the welding torches 3 and the respective grounding contacts 4 slide. In this situation, the sheet-metal pressing means 2 is moved slidably along the vertical guides so as to pass from the inactive position to the active position for locking the metal sheets.

Subsequently, each lifting member 5b moves the welding torches 3 and the respective grounding contacts 4 towards the edges to be joined.

In greater detail, as shown in figure 2, the approach motion of the welding torches 3 ends near the edges of the head and tail portions of the metal sheets, while the motion of the respective grounding contacts 4 ends when the latter abut with a transverse bar 2a, preferably forming part of the sheet-metal pressing means 2 and even more preferably integrated with the pressers 2b.

Once the welding torches 3 and the respective grounding contacts 4 have been brought close to the metal sheets, the carriages 5a are moved slidably along the guide 5 in such a way that each welding torch 3 and the respective grounding contact 4 are moved slidably along the transverse direction "B". In particular, each welding torch 3 slides near the gap between the metal sheets while the respective grounding contacts 4 are in simultaneous sliding contact on the transverse bar 2a so as to close the electric circuit created with the respective welding torch 3 and activate the welding torch 3 itself to carry out the operations of joining the metal sheets.

In other words, as shown in figure 2, in order to weld the metal sheets together, the lifting members 5b bring the welding torches 3 and the respective grounding contacts 4 close to the metal sheets such that an end portion 3a of the welding torches 3 is near the edges of the metal sheets and the grounding contacts 4 abut with the transverse bar 2a. In this situation, the electric circuit created by the grounding contacts 4 with the respective welding torches 3 is closed and the latter are actuated to join together the edges of the tail and head portions of the metal sheets.

During the actuation of the welding torches 3, the carriages 5a move the welding torches 3 and the respective grounding contacts 4 slidably so that while a welding torch 3 is progressively creating a welding seam in the gap between the metal sheets, the respective grounding contact 4 slides on the transverse bar 2a moving together with the welding torch 3 itself.

Advantageously, the possibility of moving each welding torch 3 together with the relative grounding contact 4 separately from the others prevents the occurrence of sudden variations in voltage and current which might lead to damages to the welding itself.

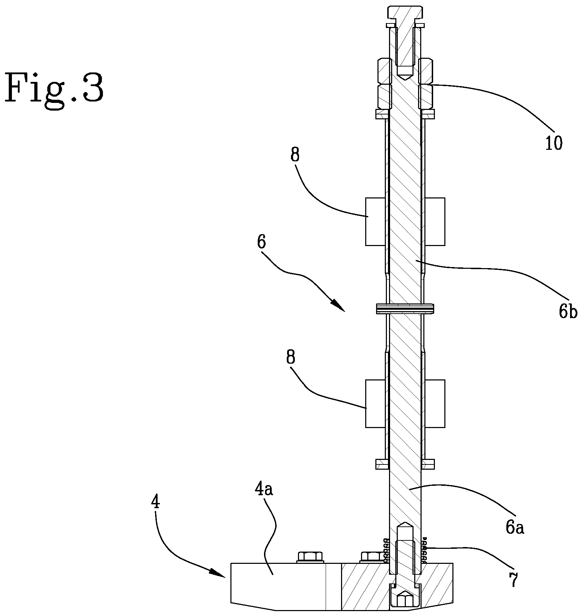

With reference now to figure 3, an embodiment of a grounding contact 4 defined by a movable plate 4a configured to define a sliding electric contact is shown.

In particular, the plate 4a is configured to abut, and subsequently slide, on the transverse bar 2a when the lifting members 5b move closer to the welding torches 3 and the grounding contacts 4 to the metal sheets to be joined.

Preferably, the movable plate 4a is made of copper.

Even more preferably, the movable plate 4a has a seat or a cavity 4a' configured to receive an end portion 3a of the respective welding torch 3. Advantageously, this conformation of the movable plate 4a allows considerably reducing the distance between the welding torch 3 and the movable plate 4a itself such that the probability of interferences occurring during the joining operations of the metal sheets is further reduced.

In the embodiment shown in the accompanying figures, the plate 4a is supported by a respective grounding arm 6.

Preferably, the grounding arm 6 is parallel to the extension direction "X" of the respective welding torch 3 and even more preferably, the grounding arm 6 extends perpendicularly to the resting plane "P".

As shown in figure 3, the grounding arm 6 and the respective movable plate 4a can be connected by means of a sliding connection.

In particular, the plate 4a is supported restingly on a shoulder that is preferably below the grounding arm 6.

Preferably, the grounding arm 6 comprises an inner shaft 6a defining below the shoulder and an outer hollow shaft 6b slidably mounted on the inner shaft 6a.

The outer shaft 6b also has anchoring means 8 for anchoring to a movement structure 9 of the grounding arm 6.

In the embodiment shown in the accompanying figures, the movement structure 9 is made in the form of a plate connected to the carriage 5a and configured to support both a welding torch 3 and the grounding arm 6 supporting the relative plate 4a. In this embodiment, therefore, the welding torch 3 is anchored to the movement structure 9 as well as the respective grounding contact 4 which is engaged with the grounding arm 6, in turn fixed to the movement structure 9 by means of the anchoring means 8.

In a further embodiment, not shown, the grounding arm 6 is anchored directly to the welding torch 3 by means of the anchoring means 8.

In the preferred embodiment, shown in figure 3, an elastic element 7, such as a spring, is interposed between the grounding arm 6 and the movable plate 4a. More in detail, the elastic element 7 is interposed or interposable between the outer hollow shaft 6b and the respective plate 4a and is configured to influence a vertical sliding movement of the plate 4a with respect to the grounding arm 6. The plate 4a is in fact liftingly movable with respect to the grounding arm 6 against the action of the elastic element 7.

In use, therefore, when each welding torch 3 approaches the edges of the metal sheets to be joined, the lifting member 5b moves the welding torch 3 and the respective plate 4a engaged with the grounding arm 6 towards the metal sheets. In this situation, during the approach to the metal sheets, the plate 4a intercepts the transverse bar 2a of the sheet-metal pressing means 2 and abuts therewith while the respective welding torch 3 slides inside the seat 4a' of the plate 4a and continues its motion of approach to the edges of the metal sheets to bring its end portion 3a to a position close to the edges themselves.

In this situation, while the welding torch 3 is moving towards the metal sheets and the plate 4a is in abutment with the transverse bar 2a, the hollow outer shaft 6b slides on the inner shaft 6a until it intercepts the elastic element 7.

The elastic element 7 is therefore compressed depending on how much the welding torch 3 moves in its motion of approach towards the metal sheets beyond the abutment level of the plate 4a against the transverse bar 2a.

If, for example, the welding torch 3 falls far below the level at which the plate 4a rests on the transverse bar 2a, the elastic element 7 is compressed a lot by the hollow outer shaft 6b which thus exerts a high pressure on the plate 4a. On the contrary, if the welding torch 3 ends its approach to the metal sheets slightly below the level defined by the plate 4a resting on the transverse bar 2a, the elastic element 7 undergoes less compression by the outer hollow shaft 6b sliding on the inner shaft 6a and therefore, the crushing pressure exerted on the plate 4a is lower.

In the preferred embodiment shown in figure 3, in order to vary the pressure exerted on the plate 4a by the hollow outer shaft 6b, the welding machine 1 comprises adjusting means 10 active between the inner shaft 6a and the outer hollow shaft 6b of each grounding arm 6 to determine an upper limit position of the hollow outer shaft 6b with respect to the inner shaft 6a.

Preferably, the adjusting means 10 is made in the form of bolts fitted on the grounding arm 6.

Advantageously, the presence of the adjusting means 10 allows the welding machine 1 to be adapted to any type and size of the metal sheets to be treated.

In fact, by adjusting the upper limit position of the hollow outer shaft 6b with respect to the inner shaft 6a, it is possible to adjust the pressure exerted by the plate 4a on the transverse bar 2a depending on how much the respective welding torch 3 needs to approach the metal sheets to be joined.

Once each welding torch 3 reaches the position near the edges of the head and tail portions of the metal sheets and the respective movable plate 4a abuts with the transverse bar 2a, the carriages 5 are moved along the guide 5. In this situation, the movable plates 4a are slidably moved in contact with the transverse bar 2a and the relative welding torches 3 are slidably moved along the edges of the head and tail portions to be joined to carry out the welding.

The present invention achieves the proposed objects, eliminating the drawbacks that have emerged from the known art.

In particular, the integral movement of the welding torches 3 with the respective grounding contacts 4 allows a correct setting of the voltage and current suitable for welding for each welding torch 3 without interferences between the welding torches 3 themselves.

The integral movement of the welding torches 3 with the respective grounding contacts 4 allows a joint between the head portion and the tail portion of two metal sheets to be made by means of more than two welding torches 3, considerably speeding up the cycle times.

The integral movement of the welding torches 3 with the respective grounding contacts 4 avoids interferences between the grounding contacts 4 of the various welding torches 3 so as to obtain an optimal welding seam.

## Claims

1. A welding machine (1) comprising:
- a resting plane (P) configured to support respectively a tail portion and a head portion of two metal sheets to be joined, said metal sheets being slidable along an advancement direction (A);
- sheet-metal pressing means (2) configured to lock in a set position said head and tail portions on said resting plane (P);
- a plurality of welding torches (3) configured to join respective edges of said head and tail portions and slidably movable along a transverse direction (B) to said advancement direction (A);
**characterized in that** it further comprises:
- a plurality of grounding contacts (4) that is each electrically associated with a respective welding torch (3) and movable solidly constrained to the respective welding torch (3) along said transverse direction (B).

2. The machine (1) according to claim 1, further comprising a guide (5) extending along said transverse direction (B) and a plurality of carriages (5a) that is slidably moveable on said guide (5), each carriage (5a) supporting a respective welding torch (3) and a respective grounding contact (4).

3. The machine (1) according to claim 2, wherein each welding torch (3) and the respective grounding contact (4) are movable towards and away from the resting plane (P) integrally, in particular said welding torch (3) and said grounding contact (4) being mounted on the same lifting member (5b) mounted on the respective carriage (5a).

4. The machine (1) according to any one of the preceding claims, comprising a cross bar (2a) on which said grounding contacts (4) are in simultaneous sliding contact, said cross bar (2a) preferably forming part of said sheet-metal pressing means (2).

5. The machine (1) according to any one of the preceding claims, wherein said grounding contact (4) is defined by a movable plate (4a) configured to define a sliding electric contact, said plate (4a) being supported by a respective grounding arm (6), preferably said grounding arm (6) being parallel to the extension direction (X) of the respective torch (4), still more preferably said grounding arm (6) extending perpendicularly to said resting plane (P).

6. The machine (1) according to claim 5, wherein said plate (4a) has a seat or cavity (4a') configured to receive an end portion (3a) of a respective welding torch (3), said plate (4a) preferably being made of copper.

7. The machine (1) according to claim 5 or 6, wherein said grounding arm (6) and the respective plate (4a) are coupled by a sliding connection and wherein between said grounding arm (6) and said plate (4a) an elastic element (7) is interposed configured to influence a vertical sliding movement of said plate (4a) with respect to the grounding arm (6).

8. The machine (1) according to claim 7, wherein said plate (4a) is supported restingly on a shoulder that is preferably below said grounding arm (6) and wherein the plate (4a) is liftingly movable with respect to the grounding arm (6) against the action of said elastic element (7).

9. The machine according to claim 8, wherein said grounding arm (6) comprises an inner shaft (6a) and an outer hollow shaft (6b), wherein said inner shaft (6a) defines below said shoulder and wherein the outer hollow shaft (6b) is slidably mounted on the inner shaft (6a) and has anchoring means (8) for anchoring to a movement structure (9) of the grounding arm (6), said elastic element (7) being interposed or interposable between the outer hollow shaft (6b) and the respective plate (4a).

10. The machine (1) according to claim 9, further comprising adjusting means (10) active between the inner shaft (6a) and the outer hollow shaft (6b) to determine an upper limit position of the outer hollow shaft (6b) with respect to the inner shaft (6a).

11. The machine (1) according to any one of the preceding claims, wherein the sheet-metal pressing means (2) comprises one or more pressers (2b) movable along a direction that is perpendicular to the resting plane (P) between an active position, wherein said pressers (2b) lock the head portion and the tail portion of said sheet metal against the resting plane (P), and an inactive position, wherein said pressers (2b) occupy a position that is distal from said metal sheets.

## Patentansprüche

1. Schweißmaschine (1), umfassend:
- eine Ruheebene (P), die ausgelegt ist, um jeweils einen endseitigen Abschnitt und einen stirnseitigen Abschnitt von zwei zusammenzufügenden Metallblechen zu tragen, wobei die Metallbleche entlang einer Vorschubrichtung (A) verschiebbar sind;
- Blechmetallpressmittel (2), die ausgelegt sind, um den endseitigen und den stirnseitigen Abschnitt auf der Ruheebene (P) in einer eingestellten Position festzuspannen;
- eine Vielzahl von Schweißbrennern (3), die ausgelegt sind, um jeweilige Kanten des stirnseitigen und des endseitigen Abschnitts zusammenzufügen, und die verschiebbar entlang einer Querrichtung (B) zur Vorschubrichtung (A) bewegbar sind,
**dadurch gekennzeichnet, dass** sie zudem Folgendes umfasst:
- eine Vielzahl von Erdungskontakten (4), die jeweils elektrisch mit einem jeweiligen Schweißbrenner (3) assoziiert und fest verbunden mit dem jeweiligen Schweißbrenner (3) entlang der Querrichtung (B) bewegbar sind.

2. Maschine (1) nach Anspruch 1, zudem umfassend eine Führung (5), die sich entlang der Querrichtung (B) erstreckt, und eine Vielzahl von Schlitten (5a), die verschiebbar auf der Führung (5) bewegbar sind, wobei ein jeder Schlitten (5a) einen jeweiligen Schweißbrenner (3) und einen jeweiligen Erdungskontakt (4) trägt.

3. Maschine (1) nach Anspruch 2, wobei ein jeder Schweißbrenner (3) und der jeweilige Erdungskontakt (4) in einem Stück hinführend zur und wegführend von der Ruheebene (P) bewegbar sind, wobei der Schweißbrenner (3) und der Erdungskontakt (4) insbesondere auf demselben Hebeelement (5) montiert sind, das auf dem jeweiligen Schlitten (5a) montiert ist.

4. Maschine (1) nach einem der vorhergehenden Ansprüche, umfassend einen Querstab (2a), auf dem die Erdungskontakte (4) in simultanem Verschiebekontakt sind, wobei der Querstab (2a) vorzugsweise einen Teil der Blechmetallpressmittel (2) formt.

5. Maschine (1) nach einem der vorhergehenden Ansprüche, wobei der Erdungskontakt (4) durch eine bewegbare Platte (4a) definiert ist, die ausgelegt ist, um einen elektrischen Gleitkontakt zu definieren, wobei die Platte (4a) von einem jeweiligen Erdungsarm (6) getragen wird, wobei der Erdungsarm (6) vorzugsweise parallel zur Ausdehnungsrichtung (X) des jeweiligen Brenners (4) angeordnet ist, wobei sich der Erdungsarm (6) noch bevorzugter rechtwinkelig zur Ruheebene (P) erstreckt.

6. Maschine (1) nach Anspruch 5, wobei die Platte (4a) eine Aufnahme oder einen Hohlraum (4a') aufweist, die/der ausgelegt ist, um einen Endabschnitt (3a) des jeweiligen Schweißbrenners (3) aufzunehmen, wobei die Platte (4a) vorzugsweise aus Kupfer besteht.

7. Maschine (1) nach Anspruch 5 oder 6, wobei der Erdungsarm (6) und die jeweilige Platte (4a) durch eine Verschiebeverbindung gekuppelt sind und wobei zwischen dem Erdungsarm (6) und der Platte (4a) ein elastisches Element (7) eingesetzt ist, das ausgelegt ist, um eine vertikale Verschiebebewegung der Platte (4a) in Bezug auf den Erdungsarm (6) zu beeinflussen.

8. Maschine (1) nach Anspruch 7, wobei die Platte (4a) ruhend auf einer Schulter getragen wird, die sich vorzugsweise unter dem Erdungsarm (6) befindet, und wobei die Platte (4a) sich hebend in Bezug auf den Erdungsarm (6) gegen die Wirkung des elastischen Elements (7) bewegbar ist.

9. Maschine nach Anspruch 8, wobei der Erdungsarm (6) eine innere Welle (6a) und eine äußere Hohlwelle (6b) umfasst, wobei die innere Welle (6a) darunter die Schulter definiert, und wobei die äußere Hohlwelle (6b) verschiebbar auf der inneren Welle (6a) montiert ist und Verankerungsmittel (8) zum Verankern an einer Bewegungsstruktur (9) des Erdungsarms (6) aufweist, wobei das elastische Element (7) zwischen der äußeren Hohlwelle (6b) und der jeweiligen Platte (4a) eingesetzt oder einsetzbar ist.

10. Maschine (1) nach Anspruch 9, zudem umfassend Einstellmittel (10), die zwischen der inneren Welle (6a) und der äußeren Hohlwelle (6b) aktiv sind, um eine obere Grenzposition der äußeren Hohlwelle (6b) in Bezug auf die innere Welle (6a) zu bestimmen.

11. Maschine (1) nach einem der vorhergehenden Ansprüche, wobei die Blechmetallpressmittel (2) einen oder mehrere Presser (2b) umfassen, die entlang einer Richtung bewegbar sind, die rechtwinkelig zur Ruheebene (P) zwischen einer aktiven Position, in der die Presser (2b) den stirnseitigen Abschnitt und den endseitigen Abschnitt des Blechmetalls gegen die Ruheebene (P) festspannen, und einer inaktiven Position, in der die Presser (2b) eine Position einnehmen, die von den Metallblechen entfernt ist, bewegbar sind.

## Revendications

1. Machine de soudage (1), comprenant :
- un plan d'appui (P), configuré pour supporter respectivement une portion de queue et une portion de tête de deux tôles à assembler, lesdites tôles pouvant coulisser le long d'une direction d'avancement (A) ;
- des moyens de pressage de tôle (2), configurés pour verrouiller dans une position définie lesdites portions de tête et de queue sur ledit plan d'appui (P) ;
- une pluralité de torches de soudage (3), configurées pour joindre les bords respectifs desdites portions de tête et de queue et mobiles de manière coulissante le long d'une direction transversale (B) à ladite direction d'avancement (A) ;
**caractérisée en ce qu'**elle comprend aussi :
- une pluralité de contacts de mise à la terre (4) qui sont chacun associés électriquement à une torche de soudage respectif (3) et mobiles solidement contraints à la torche de soudage respective (3) le long de ladite direction transversale (B).

2. Machine (1) selon la revendication 1, comprenant en outre un guide (5) s'étendant le long de ladite direction transversale (B) et une pluralité de chariots (5a) qui est mobile de manière coulissante sur ledit guide (5), chaque chariot (5a) supportant une torche de soudage respective (3) et un contact de mise à la terre respectif (4).

3. Machine (1) selon la revendication 2, dans laquelle chaque torche de soudage (3) et le contact de mise à la terre respectif (4) sont mobiles en se rapprochant et en s'éloignant du plan d'appui (P) intégralement, en particulier ladite torche de soudage (3) et ledit contact de mise à la terre (4) étant montés sur le même élément de levage (5b) monté sur le chariot respectif (5a).

4. Machine (1) selon l'une quelconque des revendications précédentes, comprenant une barre transversale (2a) sur laquelle lesdits contacts de mise à la terre (4) sont en contact coulissant simultané, ladite barre transversale (2a) faisant de préférence partie desdits moyens de pressage de tôle (2).

5. Machine (1) selon l'une quelconque des revendications précédentes, dans laquelle ledit contact de mise à la terre (4) est défini par une plaque mobile (4a), configurée pour définir un contact électrique coulissant, ladite plaque (4a) étant supportée par un bras de mise à la terre respectif (6), de préférence ledit bras de mise à la terre (6) étant parallèle à la direction d'extension (X) de la torche respective (4), encore plus préférablement ledit bras de mise à la terre (6) s'étendant perpendiculairement audit plan d'appui (P).

6. Machine (1) selon la revendication 5, dans laquelle ladite plaque (4a) a un siège ou une cavité (4a'), configuré(e) pour recevoir une portion d'extrémité (3a) d'une torche de soudage respective (3), ladite plaque (4a) étant de préférence en cuivre.

7. Machine (1) selon la revendication 5 ou 6, dans laquelle ledit bras de mise à la terre (6) et la plaque respective (4a) sont couplés par une connexion coulissante et dans laquelle entre ledit bras de mise à la terre (6) et ladite plaque (4a) est interposé un élément élastique (7), configuré pour influencer un mouvement de coulissement vertical de ladite plaque (4a) par rapport au bras de mise à la terre (6).

8. Machine (1) selon la revendication 7, dans laquelle ladite plaque (4a) est supportée en appui sur un épaulement qui est de préférence en dessous dudit bras de mise à la terre (6) et dans laquelle la plaque (4a) est mobile en élévation par rapport au bras de mise à la terre (6) contre l'action dudit élément élastique (7).

9. Machine selon la revendication 8, dans laquelle ledit bras de mise à la terre (6) comprend un arbre interne (6a) et un arbre creux externe (6b), dans laquelle ledit arbre interne (6a) définit en dessous dudit épaulement et dans laquelle l'arbre creux externe (6b) est monté de manière coulissante sur l'arbre interne (6a) et comporte des moyens d'ancrage (8) pour s'ancrer à une structure de mouvement (9) du bras de mise à la terre (6), ledit élément élastique (7) étant interposé ou pouvant être interposé entre l'arbre creux externe (6b) et la plaque respective (4a).

10. Machine (1) selon la revendication 9, comprenant en outre des moyens de réglage (10) actifs entre l'arbre intérieur (6a) et l'arbre creux extérieur (6b) pour déterminer une position limite supérieure de l'arbre creux extérieur (6b) par rapport à l'arbre intérieur (6a).

11. Machine (1) selon l'une quelconque des revendications précédentes, dans laquelle les moyens de pressage de tôle (2) comprennent un ou plusieurs presseurs (2b) mobiles le long d'une direction qui est perpendiculaire au plan d'appui (P) entre une position active, dans laquelle lesdits presseurs (2b) verrouillent la portion de tête et la portion de queue de ladite tôle contre le plan d'appui (P), et une position inactive, dans laquelle lesdits presseurs (2b) occupent une position qui est distale desdites tôles.
